## Europäisches Patentamt
## European Patent Office
## Office européen des brevets

(11) Veröffentlichungsnummer: **0 008 418**
A1

(12) **EUROPÄISCHE PATENTANMELDUNG**

(21) Anmeldenummer: **79102895.4**

(22) Anmeldetag: **10.08.79**

(51) Int. Cl.³: **C 09 D 3/72**
 C 08 G 18/62, C 09 D 3/80

(30) Priorität: 22.08.78 DE 2836612

(43) Veröffentlichungstag der Anmeldung:
05.03.80 Patentblatt 80/5

(84) Benannte Vertragsstaaten:
BE DE FR GB IT NL

(71) Anmelder: BAYER Aktiengesellschaft
Zentralbereich Patente,Marken und Lizenzen Bayerwerk
D-5090 Leverkusen 1(DE)

(72) Erfinder: Kolb, Günter, Dr.
Heinrich von Kleist-Strasse 7
D-5090 Leverkusen(DE)

(72) Erfinder: Probst, Joachim, Dr.
Wolfskaul 1
D-5000 Koeln 80(DE)

(72) Erfinder: Riberi, Bernd, Dr.
Jakob-Böhme Strasse 2
D-5000 Koeln 80(DE)

(72) Erfinder: Sonntag, Michael, Dr.
Gartenstrasse 27a
D-5068 Odenthal(DE)

(72) Erfinder: Wingler, Frank, Dr.
Walter-Flex-Strasse 17
D-5090 Leverkusen(DE)

(54) **Verfahren zur Herstellung von Überzügen.**

(57) Die vorliegende Erfindung betrifft ein neues Verfahren zur Herstellung von Überzügen durch Beschichtung beliebiger Substrate mit einem zu einer Polyurethanlackschicht aushärtenden Beschichtungsmittel, welches als Bindemittel gegebenenfalls blockierte Polyisocyanate in Kombination mit Polyhydroxypolyacrylatharzen aus

A) Hydroxyalkylestern der Acrylsäure oder Methacrylsäure oder deren Mischungen,

B) Styrol, substituierte Styrole oder Methylmethacrylat oder deren Mischungen,

C) Acrylsäure- oder Methacrylsäure-alkylester oder deren Mischungen,

D) gegebenenfalls olefinisch ungesättigten Dicarbonsäuren oder ein Maleinsäurehalbester oder deren Mischungen und

E) Acrylnitril und/oder Methacrylnitril enthält.

BAYER AKTIENGESELLSCHAFT     5090 Leverkusen, Bayerwerk
Zentralbereich     Wr-by
Patente, Marken und Lizenzen

## Verfahren zur Herstellung von Überzügen

Die vorliegende Erfindung betrifft ein neues Verfahren zur Herstellung von Überzügen unter Verwendung von Beschichtungsmitteln, welche als Bindemittel Gemische aus Lackpolyisocyanaten mit ausgewählten Polyhydroxypolyacrylaten enthalten.

In der DE-OS 2 460 329 ist ein Verfahren zur Herstellung von niedermolekularen, Acrylatharzen beschrieben, die durch radikalische Copolymerisation in Masse oder einem organischen Lösungsmittel bzw. Lösungsmittelgemisch bei Temperaturen von 80 bis 120°C hergestellt werden. Die genannten, aus 10 bis 50 Gew.-Teilen eines Hydroxyalkylesters der Acrylsäure oder Methacrylsäure, O bis 80 Gew.-Teilen Styrol bzw. dessen Derivaten, 10 bis 90 Gew.-Teilen eines (Meth)Acrylsäureesters mit 1 bis 12

- 2 -

C-Atomen im Alkoholrest und 0 bis 50 Gew.-Teilen einer $\alpha$ ,ß-monoolefinisch ungesättigten Mono- oder Dicarbonsäure mit 3 bis 5 C-Atomen bestehenden Acrylatharze ergeben in Verbindung mit einigen Di- und Polyisocyanaten Lacke, die sich für die Automobildecklackierung eignen. Ein Nachteil dieser Harze ist jedoch die z.T. schlechte Verträglichkeit mit einer Reihe von Polyisocyanaten, die sich schon beim Zusammengeben der beiden Lackkomponenten sowohl durch eine Trübung der Mischlösung als auch eine Trübung im getrockneten, ausgehärteten Lackfilm bemerkbar machen kann.

In der US-PS 3 002 959 werden ebenfalls Hydroxylgruppen aufweisende Polyacrylatharze bzw. Verfahren zu ihrer Herstellung beschrieben, die mit Vernetzern, u.a. mit Diisocyanaten, zu Lackschichten ausgehärtet werden können. Irgendwelche konkreten Hinweise, wie die obengenannten Schwierigkeiten, insbesondere bei Verwendung typischer Lackpolyisocyanate, d.h. bei Verwendung von höher als difunktionellen, Biuret-, Urethan- oder Isocyanuratgruppen aufweisenden Polyisocyanaten als Vernetzer behoben werden könnten, sind dieser Patentschrift nicht zu entnehmen.

Es war daher die Aufgabe der vorliegenden Erfindung, ein neues Verfahren zur Herstellung von Überzügen zur Verfügung zu stellen, bei welchem Bindemittel auf Basis von Lackpolyisocyanaten und Hydroxylgruppen aufweisenden Polyacrylatharzen zum Einsatz gelangen, die nicht mit den

Le A 19 069

genannten Nachteilen behaftet sind. Diese Aufgabe konnte durch das nachstehend näher beschriebene erfindungsgemäße Verfahren gelöst werden.

Gegenstand der vorliegenden Erfindung ist ein Verfahren zur Herstellung von Überzügen durch Beschichtung beliebiger Substrate mit einem, gegebenenfalls unter Hitzeeinwirkung, zu einer Polyurethanlackschicht aushärtenden Beschichtungsmittel, welches

a) als Bindemittel im wesentlichen ein Gemisch aus

aa) gegebenenfalls in mit Blockierungsmittel für Isocyanatgruppen blockierter Form vorliegenden, Biuret-, Urethan- oder Isocyanuratgruppen aufweisenden, Lackpolyisocyanaten und

ab) Polyhydroxypolyacrylatharzen, sowie

b) gegebenenfalls die in der Polyurethanlacktechnologie üblichen Hilfs- und Zusatzmittel

enthält, dadurch gekennzeichnet, daß man als Polyhydroxypolyacrylatharze Copolymerisate aus

A) 5 bis 30 Gew.-Teilen eines Hydroxyalkylesters der Acrylsäure oder Methacrylsäure mit 2 bis 4 C-Atomen im Hydroxyalkylrest oder deren Mischungen;

Le A 19 069

B) 5 bis 75 Gew.-Teilen Styrol, α-Methylstyrol, o-Chlorstyrol, p-Chlorstyrol, o-, m- oder p-Methylstyrol,
p-tert.-Butylstyrol oder Methylmethacrylat oder deren
Mischungen;

C) 10 bis 90 Gew.-Teilen eines Acrylsäurealkylester mit 1
bis 12 C-Atomen im Alkoholrest oder eines Methacrylsäurealkylesters mit 2 bis 12 C-Atomen im Alkoholrest
oder deren Mischungen;

D) O bis 30 Gew.-Teilen einer α,ß-monoolefinisch ungesättigten Mono- oder Dicarbonsäure mit 3 bis 5 C-Atomen
oder eines Maleinsäurehalbesters mit 2 bis 14 C-Atomen
im Alkoholrest oder deren Mischungen und

E) 5 bis 35 Gew.-Teilen Acrylnitril und/oder Methacrylnitril verwendet, wobei sich die Summe der Gew.-Teile
der Komponenten A bis E zu 100 ergänzt.

Beim erfindungsgemäßen Verfahren werden als Bindemittelkomponente aa) Lackpolyisocyanate, d.h. insbesondere Biuret-,
Urethan- oder Isocyanuratgruppen aufweisende Polyisocyanate
einer über 2 vorzugsweise zwischen 2,5 und 6 liegenden
mittleren NCO-Funktionalität eingesetzt. Diese Polyisocyanate weisen vorzugsweise aromatisch, cycloaliphatisch
oder aliphatisch gebundene Isocyanatgruppen auf. Für licht-

Le A 19 069

echte Beschichtungen werden Polyisocyanate mit aliphatisch und/oder cycloaliphatisch gebundenen Isocyanatgruppen bevorzugt. Die erfindungsgemäß einzusetzenden Lackpolyisocyanate werden durch an sich bekannte Modifizierung von einfachen organischen Diisocyanaten unter Biuret-, Urethan- oder Isocyanurat-Bildung hergestellt, wobei jeweils nach der Modifizierungsreaktion evtl. noch vorliegende Überschüsse an nicht modifiziertem monomerem Ausgangsisocyanat in an sich bekannter Weise vorzugsweise durch Destillation so weit entfernt werden, daß in den erfindungsgemäß einzusetzenden Lackpolyisocyanaten höchstens 0,7 , vorzugsweise 0,5 Gew.-% an überschüssigem Diisocyanat vorliegen. Die erfindungsgemäß einzusetzenden Lackpolyisocyanate weisen im allgemeinen einen NCO-Gehalt bezogen auf Feststoff im Bereich von 10 bis 30 Gew.-% auf.

Geeignete Diisocyanate zur Herstellung der Lackpolyisocyanate sind beispielsweise 2,4- und/oder 2,6-Diisocyanatotoluol, 2,4'-Diisocyanato-dicyclohexylmethan, 4,4'-Diisocyanato-dicyclohexylmethan, Hexamethylendiisocyanat oder 1-Isocyanato-3,3,5-trimethyl-5-isocyanatomethyl-cyclohexan (IPDI). 2,4-Diisocyanatotoluol, Hexamethylendiisocyanat und IPDI stellen die bevorzugten Diisocyanate zur Herstellung der erfindungsgemäß einzusetzenden Lackpolyisocyanate dar. Die Herstellung der Lackpolyisocyanate aus den beispielhaft genannten Ausgangsdiisocyanaten erfolgt nach bekannten Methoden des Standes der Technik. So kann beispielsweise die Herstellung der Biuretgruppen aufweisenden Lackpolyisocyanate nach

Le A 19 069

dem Verfahren der US-Patentschriften 3 124 605, 3 358 010, 3 903 126, 3 903 127 oder 3 976 622 erfolgen. Die Herstellung von erfindungsgemäß einsetzbaren Urethanpolyisocyanaten geschieht beispielsweise gemäß US-PS 3 183 112, während die Herstellung von Isocyanuratgruppen aufweisenden, erfindungsgemäß geeigneten Lackpolyisocyanaten beispielsweise nach den Verfahren der GB-PSen 1 060 430, 1 234 972, 1 506 373 oder 1 458 564 bzw. gemäß US-PS 3 394 111, US-PS 3 645 979 oder US-PS 3 919 218 erfolgt.

Zu den besonders bevorzugten Lackpolyisocyanaten gehören die Biuretgruppen aufweisenden Polyisocyanate gemäß US-PS 3 124 605, insbesondere jene auf Basis von Hexamethylendiisocyanat, die Urethangruppen aufweisenden Polyisocyanate gemäß US-PS 3 183 112, insbesondere jene auf Basis von 2,4-Diisocyanatotoluol, Trimethylolpropan und den verschiedenen Butandiolen, sowie die Isocyanuratgruppen aufweisenden Polyisocyanate gemäß den obengenannten Patentschriften, insbesondere die entsprechenden Isocyanuratgruppen aufweisenden Polyisocyanate auf Basis von 2,4-Diisocyanatotoluol, dessen Gemischen mit Hexamethylendiisocyanat oder auf Basis von IPDI.

Bei der erfindungswesentlichen Bindemittelkomponente ab) handelt es sich um Polyhydroxypolyacrylate auf Basis ausgewählter, obengenannter Monomerer. Vorzugsweise handelt es sich bei der Bindemittelkomponente ab) um Copolymerisate

Le A 19 069

aus

A₁  10 bis 25 Gew.-Teile 2-Hydroxyäthylacrylat,
                        2-Hydroxyäthylmethacrylat,
                        2-Hydroxypropylacrylat,
                        2-Hydroxypropylmethacrylat,
                        4-Hydroxybutyl(meth)acrylat,
                        oder deren Mischungen;

B₁  20 bis 75 Gew.-Teile Styrol oder Methylmethacrylat
                        oder deren Mischungen;

C₁  10 bis 60 Gew.-Teile Äthylacrylat, Butylacrylat, Butylmethacrylat, 2-Äthylhexylacrylat
                        oder 2-Äthylhexylmethacrylat oder
                        deren Mischungen;

D₁  0 bis 5 Gew.-Teile  Acrylsäure, Methacrylsäure oder
                        Maleinsäurehalbester mit 4-8
                        C-Atomen in der Alkoholkomponente
                        und

E₁  5 bis 15 Gew.-Teile Acrylnitril oder Methacrylnitril,

wobei die Summe der Gewichtsteile A-E 100 beträgt.

Die Monomeren A-E untereinander werden im wesentlichen
in den gleichen Verhältnissen, wie zur Polymerisation
eingesetzt, in das Copolymere eingebaut, wobei diese

Le A 19 069

- 8 -

einpolymerisierten Einheiten weitgehend statistisch verteilt sind.

Die Monomeren der Gruppe A dienen zum Einbau der gegenüber Isocyanatgruppen reaktionsfähigen Hydroxylgruppen; die Monomeren der Gruppe B tragen zur Erhöhung der Glasübergangstemperatur und somit zur Erhöhung der Härte der erfindungsgemäßen Beschichtungen bei; die Monomeren der Gruppe C dienen zur Elastifizierung der Harze; die Monomeren der Gruppe D können zur Erhöhung der Reaktivität und/oder Funktionalität der Copolymeren beitragen; mit den Monomeren der Gruppe E werden Nitrilgruppen in die Copolymeren eingebaut,was zu der guten Verträglichkeit der erfindungsgemäß einzusetzenden Copolymeren mit den Lackpolyisocyanaten führt. Der Einbau der Monomeren der Gruppe E stellt somit einen besonders wesentlichen Punkt dar. Es war dabei überraschend, daß bereits der Einbau sehr geringer Mengen dieser nitrilhaltigen Monomeren im Bereich von 5 Gew.-% zu einer verbesserten Verträglichkeit führt.

Diese gute Verträglichkeit zeigt sich insbesondere darin, daß beim Zusammengeben der Acrylharze mit den Lackpolyisocyanaten, gegebenenfalls in Gegenwart von Lacklösungsmitteln, ebensowenig eine Trübung auftritt wie in den letztendlich erhaltenen, durchgehärteten Lackfilmen.

Le A 19 069

- 9 -

Die erfindungsgemäß einzusetzenden Polyacrylatharze ab)
weisen im allgemeinen ein dampfdruckosmometrisch bestimmtes Molekulargewicht von 1000 bis 10 000, vorzugsweise 2000 bis 5000 und OH-Zahlen im Bereich von 20
bis 150 vorzugsweise 30 bis 100 auf.

Die Herstellung der Polyacrylatharze kann entweder
kontinuierlich oder diskontinuierlich durchgeführt werden.
Wenn man in einen gerührten Tankreaktor gleichmäßig und
kontinuierlich die Monomermischung und den Initiator eindosiert und gleichzeitig die entsprechende Menge Polymerisat kontinuierlich abführt, so stellt sich nach einer
relativ kurzen Anfahrperiode im Reaktor ein stationärer
Zustand ein. Stationäre Bedingungen liegen dann vor, wenn
sich die Konzentrationen aller Reaktionspartner im Laufe
der Zeit nicht ändern. In diesem Fall ist die Herstellung
chemisch einheitlicher Copolymerer möglich. Läßt man die
Reaktionsmischung mit konstanter Geschwindigkeit in einen
Rührkessel einlaufen, ohne das Polymerisat abzuführen,
stellt sich im strengen Sinne kein stationärer Zustand
ein. Man kann sich dabei aber insofern helfen, daß man
Monomere und Initiator so zudosiert, daß die Zusammensetzungsverhältnisse weitgehend konstant bleiben. Man kann
dann von "quasistationären" Zuständen sprechen.

Die Polymerisationsgeschwindigkeit der einzelnen Monomeren
und die Zerfallgeschwindigkeit der Initiatoren ändern sich

Le A 19 069

bei Temperaturänderungen unterschiedlich stark. Daher führen schon relativ kleine Temperaturänderungen zu einer empfindlichen Störung des stationären oder quasistationären Zustands. Bei allen Polymerisationsverfahren ist daher eine gute Temperaturkonstanz nötig.

Geeignete Initiatoren zur Herstellung der Polyacrylatharze sind solche Verbindungen, die in einer Reaktion erster Ordnung thermisch in Radikale zerfallen. Die Halbwertzeiten des Radikalzerfalls geeigneter Initiatoren sollten bei 80-160$^{\circ}$C zwischen 0,01 und 100 Minuten liegen. Im allgemeinen erfolgt die Copolymerisationsreaktion im zuletztgenannten Temperaturbereich vorzugsweise zwischen 100$^{\circ}$C und 160$^{\circ}$C, unter einem Druck von 10$^3$ bis 2.10$^4$mbar, wobei sich die genaue Temperatur nach der Art des Initiators richtet. Die Initiatoren werden in Mengen von 0,05 bis 5 Gew.-% bezogen auf die Gesamtmenge an Monomeren eingesetzt. Im allgemeinen werden die eingesetzten Monomeren zu mindestens 98 % umgesetzt.

Geeignete Initiatoren sind z.B. symmetrische aliphatische Azoverbindungen wie Azoisobuttersäurenitril, Azo-bis-2-methyl-valeronitril, 1,1'-Azo-bis-1-cyclohexannitril und 2,2'-Azo-bis-isobuttersäurealkylester; symmetrische Diacylperoxide wie z.B. Acetyl-, Propionyl- oder Butyryl-

Le A 19 069

peroxid, Brom-, Nitro-, Methyl- oder Methoxyl-Gruppensubstituierte Benzoylperoxide sowie Lauroylperoxid; symmetrische Peroxydicarbonate wie z.B. Diäthyl-, Diisopropyl-, Dicyclohexyl- sowie Dibenzylperoxydicarbonat; tert.-Butylperpivalat, tert.-Butyl-peroctoat oder tert.-Butylphenylperacetat; sowie Peroxycarbamate wie tert.-Butyl-N-(phenylperoxy)-carbamat oder tert.-Butyl-N-(2,3 oder 4-chlor-phenylperoxy)carbamat; weitere Peroxide sind: tert.-Butylhydroperoxid, Di-tert.-butylperoxid, Cumolhydroperoxid, Di-Cumylperoxid.

Die Polymerisation kann in Lösung oder Substanz durchgeführt werden. Bevorzugt wird in Lösung polymerisiert. Als Lösungsmittel kommen beispielsweise Aromaten wie Benzol, Toluol, Xylol, Chlorbenzol, Ester wie Butylacetat, Äthylacetat, Äthylglykolacetat, Methylglykolacetat, Äther wie Butylglykol, Tetrahydrofuran, Dioxan, Äthylglykoläther, Ketone wie Aceton, Methyläthylketon, halogenhaltige Lösungsmittel wie Methylenchlorid oder Trichlormonofluoräthan in Betracht.

Es ist auch möglich, während der Herstellung der Polyacrylatharze sogenannte reaktive Verdünner einzusetzen, d.h. insbesondere niedermolekulare Alkohole, die nicht an der Polymerisationsreaktion teilhaben, jedoch als Alkohole gegenüber Isocyanatgruppen reaktionsfähig sind und daher letztendlich in das Polyurethan eingebaut werden. Geeignete reaktive Verdünner sind beispielsweise in der DE-AS 2 304 893 offenbart. Diese reaktiven Verdünner werden neben oder anstelle der genannten Lösungsmittel in Mengen von 0 bis 50 Gew.-% bezogen auf Monomerengemisch eingesetzt.

Nach erfolgter Copolymerisationsrekation werden im allgemeinen noch verbleibende Spuren leicht flüchtiger
Monomerer durch "Andestillieren" des Copolymerisationsansatzes entfernt, wobei jedoch die Hauptmenge der Lösungsmittel bzw. reaktiven Verdünner im Reaktionsansatz verbleibt, der auf diese Weise als einsatzbereite Lösung
in den genannten Lösungsmitteln bzw. reaktiven Verdünnern anfällt. Hieraus geht auch hervor, daß als
Lösungsmittel vorzugsweise Lacklösungsmittel eingesetzt werden. Selbstverständlich ist es auch möglich,
die Copolymerisationsreaktion lösungsmittelfrei durchzuführen und Lösungsmittel und reaktiven Verdünner anschließend dem Copolymerisat zuzugeben. Andererseits kann
das erfindungsgemäße Verfahren auch lösungsmittelfrei
durchgeführt werden, so daß gegebenenfalls bei der Copolymerisationsrekation eingesetztes Lösungsmittel vor
der erfindungsgemäßen Verwendung der Copolymerisate
destillativ entfernt werden muß. In einem solchen Falle
empfiehlt sich selbstverständlich, bereits die Herstellung der Copolymerisate lösungsmittelfrei durchzuführen.

Die Copolymerisate können im Anschluß an die Polymerisation
nach bekannten Verfahren, z.B. durch Umsetzung mit Glycid

Le A 19 069

oder Glycidestern, Carbonsäureanhydrid wie Phthalsäureanhydrid, durch Veresterung oder Umesterung mit Carbonsäuren bzw. Carbonsäureestern wie Benzoesäure, Äthylhexansäure, Fettsäuren oder Ölsäure modifiziert werden. Durch diese Modifizierung können gewisse Eigenschaften wie Pigmentverträglichkeit, Haftung und Alkalibeständigkeit verbessert werden.

Die Polyacrylatharze zeichnen sich durch eine besonders niedrige Viskosität ihrer Lösungen aus. So liegt im allgemeinen die Viskosität ihrer 50 gew.-%igen Lösung in Xylol bei 25°C stets unter 15 Pa.s. Die Molekulargewichtsverteilung kann mit Hilfe der Gelpermeationschromatographie (GPC) an Styragelen mit Tetrahydrofuran (THF) als Elutionsmittel bestimmt werden. Dabei werden nach Erstellung einer universellen Eichbeziehung (nach Z. Grubisic, P. Rempp und H. Benoit, J. Polymer Sci., Part B, Polymer Letters 5 (1967) 753) aus der Verteilung der Chromatogramme die Molekulargewichtsmittelwerte $M_w$ und $M_n$ näherungsweise bestimmt.

Die Polyacrylatharze besitzen Uneinheitlichkeiten (Mw/Mn)-1 von ca. 0,5 bis 3,0, weisen also relativ enge Verteilungen auf. Dies ist für eine gute Verträglichkeit von besonderer Bedeutung, da bei Acrylharzen mit größerer Uneinheitlichkeit Unverträglichkeit der Acrylharz-Vernetzer-Mischung auftreten kann.

Le A 19 069

- 14 -

Die erfindungsgemäßen Beschichtungsmittel können neben den bereits genannten Lösungsmitteln bzw. reaktiven Verdünnern weitere in der Polyurethanlacktechnologie übliche Hilfs- und Zusatzmittel wie z.B. Verlaufsmittel auf Celluloseesterbasis, Oligoalkylacrylate, Siliconöle, Weichmacher wie Phosphorsäureester, Phthalsäureester, Pigmente und Füllstoffe, viskositätskontrollierende Zusätze wie Bentonite und Kieselsäureester, Mattierungsmittel, Härtungsbeschleuniger wie Mangan, Blei- oder Kobaltnaphthenate sowie Zinnbeschleuniger, Calziumsalze, Basen wie Diazabicyclooctan, Säuren wie Phosphorsäure, äthanolische Salzsäure, Weinsäure oder Zitronensäure in Mengen von ca. 0,1-30 Gew.-%, bezogen auf die Gesamtmenge des Beschichtungsmittels enthalten.

Im übrigen werden die Mengenverhältnisse der einzelnen Bestandteile der erfindungsgemäß einzusetzenden Beschichtungsmittel so gewählt, daß für jede Hydroxylgruppen der im Reaktionsgemisch vorliegenden, Hydroxylgruppen aufweisenden Komponenten 0,2 bis 5 vorzugsweise 0,7 bis 1,3 Isocyanatgruppen zur Verfügung stehen. Grundsätzlich ist es auch möglich, die Isocyanatkomponente aa) in mit Blockierungsmittel für Isocyanatgruppen wie z.B. Phenolen, ε-Caprolactam, Malonsäurediäthylester oder Acetessigsäureäthylester blockierter Form einzusetzen, so daß es sich bei den erfindungsgemäß einzusetzenden Beschichtungsmitteln um Hitze-vernetzbare Einbrennlacke handelt.

Le A 19 069

Bei der Durchführung des erfindungsgemäßen Verfahrens können die erfindungsgemäß einzusetzenden Beschichtungsmittel nach allen beliebigen Methoden der Lacktechnologie wie z.B. Spritzen, Streichen, Tauchen oder Walzen auf beliebige Substrate wie z.B. Metalle, Holz, Mauerwerk, Beton, Glas, Keramik, Kunststoffe, Textilien oder Papier aufgetragen werden. Die erfindungsgemäß zum Einsatz gelangenden Beschichtungsmittel zeichnen sich durch ein langes "pot life", schnelle Trocknungszeiten, guten Verlauf, sowie Farbtreue bzw. Klarheit und hervorragende mechanische Eigenschaften der mit ihnen erhaltenen Beschichtungen aus. Auffallend ist die hervorragende Haftung auf Eisen und anderen Metallen, wie z.B. Aluminium und Zink.

Die nachstehenden Beispiele dienen der näheren Erläuterung der Erfindung. Die Molekulargewichte wurden mit Hilfe der Dampfdruckosmometrie in N,N-Dimethylformamid bestimmt.

Le A 19 069

- 16 -

Beispiele 1 bis 8 (Herstellung von erfindungsgemäß geeigneten
Polyacrylatharzen)

In einem 3 l-Glaskolben werden 264 g Essigsäure-n-butylester und 396 g Xylol auf 100°C erwärmt. Bei dieser
Temperatur, die kontrolliert gehalten wird, werden die
Lösungen der in Tabelle 1 angegebenen Zusammensetzungen
innerhalb von ca. 3 Std. volumenprogrammiert unter Luftausschluß zudosiert. Zur Nachaktivierung werden 8,63 g
t-Butylperoctoat in 93,6 g Essigsäure-n-butylester und
140,4 g Xylol gelöst zugegeben. Man rührt 6-8 Stunden
bei 100°C nach und entfernt destillativ im Wasserstrahlvakuum flüchtige Restmonomere sowie untergeordnete Mengen
des Lösungsmittelgemisches.

Tabelle 1

+) Lösungsmittel: Xylol

| Beispiel | 1 | 2 | 3 | 4 | 5 | 6 | 7 [+)] | 8 [+)] |
|---|---|---|---|---|---|---|---|---|
| Styrol (g) | 618,8 | 568,8 | 518,8 | 468,8 | 334,4 | 200,6 | 528,6 | 144,9 |
| Acrylnitril (g) | 50,0 | 100,0 | 150,0 | 200,0 | 334,4 | 468,2 | 100,0 | 100,0 |
| Acrylsäure-n-bu-tylester (g) | 432,0 | 432 | 432 | 432 | 432 | 432 | 432 | 869,2 |
| 2-Hydroxypropyl-methacrylat (g) | 278,7 | 278,7 | 278,7 | 278,7 | 278,7 | 278,7 | 278,7 | 278,7 |
| Acrylsäure (g) | 13,8 | 13,8 | 13,8 | 13,8 | 13,8 | 13,8 | - | - |
| Azoisobutter-säurenitril (g) | 41,7 | 41,7 | 41,7 | 41,7 | 41,7 | 41,7 | 41,7 | 41,7 |
| Umsatz (Mol%) | 99,0 | 98,5 | 98,2 | 98,5 | 98,3 | 97,9 | 98,5 | 99,0 |
| OH-Zahl (mgKOH/g Lösung) | 52,3 | 56,0 | 53,3 | 50,4 | 54,6 | 54,5 | 50,8 | 49,8 |
| Säurezahl (") | 5,4 | 5,7 | 5,2 | 5,7 | 4,9 | 5,8 | 0,9 | 1,0 |
| Viskosität (Pa.s) 51 % 20°C | 0,23 | 0,32 | 0,375 | 0,69 | 1,65 | 9,40 | 1,57 | 0,55 |
| Molgewicht $M_n$ (in DMF gemessen) | | 4050 | 2900 | 4190 | | | 3430 | 3430 |

Le A 19 069

Beispiele 9 bis 12 (Herstellung von erfindungsgemäß geeigneten Polycarylatharzen)

In einem 6 1-Druckautoklaven werden 1200 g Xylol auf 160°C erwärmt. Bei dieser Temperatur, die kontrolliert gehalten wird, werden die Lösungen der in Tabelle 2 angegebenen Zusammensetzungen innerhalb von ca. 3 Stunden unter Luftausschluß zudosiert. Zur Nachaktivierung werden 12,0 g Di-t-butylperoxid in 250 g Xylol gelöst zudosiert. Man rührt 2-3 Stunden bei 160°C nach und entfernt destillativ die Restmonomeren und sonstige Verunreinigungen.

Tabelle 2

| Beispiel | 9 | 10 | 11 | 12[+)] |
|---|---|---|---|---|
| Styrol (g) | 1462 | 1462 | 610 | 610 |
| Acrylnitril (g) | 168 | 168 | 168 | 168 |
| Acrylsäure-n-butylester (g) | 610 | 610 | 1462 | 1462 |
| 2-Hydroxypropyl-methacrylat (g) | 600 | 600 | 600 | 600 |
| Di-t-Butylperoxid (g) | 80 | 60 | 25 | 25 |
| Umsatz (Mol%) | 98 | 98,5 | 99 | 98,5 |
| OH-Zahl (mg KOH/g Lösung) | 57,4 | 56,1 | 57,7 | 56,7 |
| S-Zahl ( " ) | 1,6 | 1,8 | 2,3 | 2,2 |
| Viskosität (Pa.s) 20°C 70 % | 15,75 | 35,8 | 6,95 | 12,05 |
| Molgewicht $M_n$ (in DMF) | 2470 | 2610 | | 2970 |
| $M_n$ (GPC) | 1610 | 3100 | 2400 | 2700 |
| Näherungsrechnung U(GPC) | 2,9 | 2,3 | 3,4 | 3,3 |

+): bei 150°C isotherm gefahren

Le A 19 069

Beispiele 13 bis 16 (Herstellung von erfindungsgemäß geeigneten Polyacrylatharzen)

In einem 3 l-Glaskolben werden 650 g Xylol auf 110°C erwärmt. Bei dieser Temperatur, die kontrolliert gehalten wird, werden die Lösungen der in Tabelle 3 angegebenen Zusammensetzungen innerhalb von ca. 3 Stunden volumenprogrammiert unter Luftausschluß zudosiert. Zur Nachaktivierung werden 8,64 g t-Butylperoctoat in 200 g Xylol gelöst zudosiert. Man rührt 8 Stunden bei 110°C nach und entfernt destillativ im Wasserstrahlvakuum Restmonomere und andere Verunreinigungen.

Tabelle 3

| Beispiel | 13 | 14 | 15 | 16 |
|---|---|---|---|---|
| Styrol (g) | 700 | 730,8 | 280 | 305,2 |
| Methacrylnitril (g) | 177 | 106,2 | 177 | 106,2 |
| Acrylsäure-n-butylester (g) | 280 | 305,2 | 700 | 730,8 |
| 2-Hydroxypropylmethacrylat (g) | 280 | 280 | 280 | 280 |
| Benzoylperoxid (g) | 80 | 80 | 60 | 60 |
| Merkaptoäthanol (g) | 15 | 15 | 10 | 10 |
| Umsatz (Mol%) | 98,5 | 99,5 | 99,0 | 99,5 |
| OH-Zahl (mgKOH/g Lsg.) | 49,3 | 53,8 | 56,0 | 55,8 |
| Säurezahl ( " " ) | 8,9 | 9,9 | 6,7 | 4,9 |
| Viskosität (Pa.s) 20°C | 3,76 (57%) | 7,4 (60,7%) | 0,99 (54,0%) | 1,015 (56,9%) |
| Molgewicht $M_n$ (in DMF) | 2110 | 2090 | 3800 | 4610 |
| $M_n$ (GPC) | 2400 | 1930 | 5300 | 4300 |
| Näherungsrechnung U (GPC) | | | 3,1 | 3,9 |

Le A 19 069

Nachstehend wird die Herstellung einiger erfindungsgemäß geeigneter Beschichtungsmittel bzw. ihre Verwendung
gezeigt. Zum Vergleich wurde ein Acrylatharz gemäß
DE-OS 2 460 329 herangezogen. In den nachstehenden Beispielen wurden folgende Ausgangsmaterialien eingesetzt:

Acrylharz 1    Copolymerisat bestehend aus:
(Vergleich):   Acrylsäure, 2-Hydroxypropylmethacrylat,
               n-Butylacrylat, Styrol und Methylmethacrylat
               als 60 %ige Lösung in Xylol; OH-Zahl: ca. 50-
               52; Viskosität/25°C: ca. 2000 mPa.s

Acrylharz 2:   entsprechend Beispiel 6
Acrylharz 3:   entsprechend Beispiel 7
Acrylharz 4:   entsprechend Beispiel 8

Polyisocyanat I

50 gew.-%ige Lösung in Äthylacetat eines in Analogie
zu Beispiel 3 der US-PS 3 394 111 hergestellten, Isocyanuratgruppen aufweisenden Polyisocyanats auf Basis
von 2,4-Diisocyanatotoluol. NCO-Gehalt: 8 %.

Polyisocyanat II

Ein in Analogie zu Beispiel 1 der US-PS 3 645 979
hergestelltes Isocyanuratgruppen aufweisendes Polyisocyanat auf Basis von 2,4-Diisocyanatotoluol und Hexamethylendiisocyanat (60 gew.-%ige Lösung in Butylacetat)
NCO-Gehalt der Lösung: 10,5 %.

Le A 19 069

Polyisocyanat III

75 %ige Lösung in Äthylacetat eines durch Umsetzung von
überschüssigen Mengen an 2,4-Diisocyanatotoluol mit Trimethylolpropan und anschließender destillativer Entfernung
des überschüssigen Diisocyanats hergestellten, Urethangruppen aufweisenden Polyisocyanats. NCO-Gehalt der
Lösung: 13 Gew.-%.

Polyisocyanat IV

75 gew.-%ige Lösung eines Biuretgruppen aufweisenden
Polyisocyanats in Xylol/Äthylglykolacetat (1:1) auf Basis
von Hexamethylendiisocyanat. NCO-Gehalt der Lösung: 16,5 %.

Die in den nachfolgenden Beispielen beschriebenen Lacke
stellten Klarlacke mit einem Feststoffgehalt von 40 % dar.
Die zusätzliche Verdünnung erfolgte durch Verwendung
eines Gemischs aus gleichen Gew.-Teilen Äthylenglykolmonoäthyläther-acetat, Xylol und Butylacetat. Die einzelnen
Komponenten wurden in einem NCO/OH-Äquivalentverhältnis
von 1:1 entsprechenden Mengen eingesetzt. Weitere Zusatzmittel wurden nicht hinzugefügt.

Beispiel 17

Verträglichkeit der Acrylharze in Zweikomponentenlacken
mit den verschiedenen Härtern (Polyisocyanaten).

Le A 19 069

| Acryl-harz | Film Lösung mit Härter I | | Film Lösung mit Härter II | | Film Lösung mit Härter III | | Film Lösung mit Härter IV | |
|---|---|---|---|---|---|---|---|---|
| 1 | - | - | - | - | + | + | + | + |
| 2 | + | + | + | + | + | + | + | + |
| 3 | + | + | + | + | + | + | + | + |
| 4 | + | + | + | + | + | + | + | + |

Kennzeichen der Verträglichkeit

+ = einwandfrei verträglich

- = nicht verträglich

5 **Beispiel 18**

Standzeit und Viskositätsverhalten von Zweikomponentenlacken aus Acrylharzen und den verschiedenen Härtern.

a) **mit Härter I**

| Acrylharz | Standzeit in Stdn. | Auslaufzeit in sec. nach | | | |
|---|---|---|---|---|---|
| | | 0 h | 4 h | 8 h | 24 h |
| 1 | 12 | 17 | 42 | 85 | geliert |
| 3 | 36 | 17 | 20 | 22 | 87 |
| 4 | 46 | 15 | 17 | 19 | 42 |

**Le A 19 069**

b) <u>mit Härter II</u>

| Acrylharz | Standzeit in Stdn. | Auslaufzeit DIN-Becher-4 in sec. nach | | | |
|---|---|---|---|---|---|
| | | O h | 4 h | 8 h | 24 h |
| 1 | 14 | 17 | 26 | 34 | geliert |
| 2 | 11 | - | 32 | 60 | geliert |
| 3 | 84 | 15 | 14 | 15 | 20 |
| 4 | 120 | 14 | 15 | 15 | 16 |

c) <u>mit Härter III</u>

| Acrylharz | Standzeit in Stdn. | Auslaufzeit DIN-Becher-4 in sec. nach | | | |
|---|---|---|---|---|---|
| | | O h | 4 h | 8 h | 24 h |
| 1 | 26 | 20 | 26 | 30 | geliert |
| 2 | 76 | - | 22 | 23 | 42 |
| 3 | 190 | 14 | 14 | 14 | 16 |
| 4 | 310 | 14 | 14 | 14 | 14 |

a) mit Härter IV

| Acrylharz | Standzeit in Stdn. | Auslaufzeit DIN-Becher-4 in sec. nach | | | |
|---|---|---|---|---|---|
| | | O h | 4 h | 8 h | 24 h |
| 1 | 26 | 20 | 22 | 26 | 162 |
| 2 | 52 | 40 | 42 | 46 | 80 |

<u>Le A 19 069</u>

Beispiel 19

Dehnbarkeit und Pendelhärte von Zweikomponentenlacken aus Acrylharzen und den verschiedenen Härten.

a) mit Härter I

| Acrylharz | Tiefung (nach Erichsen) nach 14 d in mm | Pendelhärte (nach König) in sec. nach 1d | nach 14d |
|---|---|---|---|
| 1 | 0,6 | 147 | 185 |
| 3 | 0 | 155 | 183 |
| 4 | 5,7 | 144 | 172 |

b) mit Härter II

| Acrylharz | Tiefung (nach Erichsen) nach 14 d in mm | Pendelhärte (nach König) in sec. nach 1 d | nach 14d |
|---|---|---|---|
| 1 | 1,0 | 106 | 170 |
| 2 | 4,0-5,2 | 157 | 182 |
| 3 | 0,6 | 105 | 185 |
| 4 | 7,8 | 62 | 140 |

c) mit Härter III

| Acrylharz | Tiefung (nach Erichsen) nach 14 d in mm | Pendelhärte (nach König) in sec. nach 1 d | nach 14d |
|---|---|---|---|
| 1 | 1,0 | 95 | 180 |
| 2 | 5,7 | 112 | 206 |
| 3 | 0,7 | 60 | 200 |
| 4 | 8,1 | 40 | 134 |

Le A 19 069

d) <u>mit Härter IV</u>

| Acrylharz | Tiefung (nach Erichsen) nach 14 d in mm | Pendelhärte (nach König) in sec. nach 1d | nach 14d |
|---|---|---|---|
| 1 | 8,6 | 55 | 168 |
| 2 | 9,0 | 34 | 183 |

<u>Le A 19 069</u>

Patentansprüche

1. Verfahren zur Herstellung von Überzügen durch Beschichtung beliebiger Substrate mit einem, gegebenenfalls unter Hitzeeinwirkung, zu einer Polyurethanlackschicht aushärtenden Beschichtungsmittel, welches

a) als Bindemittel im wesentlichen ein Gemisch aus

aa) gegebenenfalls in mit Blockierungsmittel für Isocyanatgruppen blockierter Form vorliegenden, Biuret-, Urethan- oder Isocyanuratgruppen aufweisenden, Lackpolyisocyanaten und

ab) Polyhydroxypolyacrylatharzen, sowie

b) gegebenenfalls die in der Polyurethanlacktechnologie üblichen Hilfs- und Zusatzmittel

enthält, dadurch gekennzeichnet, daß man als Polyhydroxypolyacrylatharze Copolymerisate aus

A) 5 bis 30 Gew.-Teilen eines Hydroxyalkylesters der Acrylsäure oder Methacrylsäure mit 2 bis 4 C-Atomen im Hydroxyalkylrest oder deren Mischungen;

B) 5 bis 75 Gew.-Teilen Styrol, $\alpha$-Methylstyrol, o-Chlorstyrol, p-Chlorstyrol, o-, m- oder p-Methylstyrol, p-tert.-Butylstyrol oder Methylmethacrylat oder deren Mischungen;

Le A 19 069

C) 10 bis 90 Gew.-Teilen eines Acrylsäurealkylesters mit 1
bis 12 C-Atomen im Alkoholrest oder eines Methacrylsäurealkylesters mit 2 bis 12 C-Atomen im Alkoholrest
oder deren Mischungen;

D) O bis 30 Gew.-Teilen einer $\alpha,\beta$-monoolefinisch ungesättigten Mono- oder Dicarbonsäure mit 3 bis 5 C-Atomen
oder eines Maleinsäurehalbesters mit 2 bis 14 C-Atomen
im Alkoholrest oder deren Mischungen und

E) 5 bis 30 Gew.-Teilen Acrylnitril und/oder Methacrylnitril verwendet, wobei sich die Summe der Gew.-Teile
der Komponenten A bis E zu 100 ergänzt.

2. Verfahren gemäß Anspruch 1, dadurch gekennzeichnet,
daß man die Mengenverhältnisse der einzelnen Komponenten
des Beschichtungsmittels so wählt, daß ein Äquivalentverhältnis zwischen, gegebenenfalls blockierten, Isocyanatgruppen zu gegenüber Isocyanatgruppen reaktionsfähigen Gruppen von 0,2 : 1 bis 1:5 vorliegt.

Le A 19 069

# EUROPÄISCHER RECHERCHENBERICHT

Europäisches
Patentamt

Nummer der Anmeldung

EP 79 10 2895

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | FR - A - 2 193 862 (DEGUSSA)<br><br>* Seite 13, Anspruch; Seite 2, Zeile 24 bis Seite 3, Zeile 18; Seiten 11 und 12, Beispiel 4 * | 1,2 |
| X | FR - A - 1 563 045 (BASF)<br><br>* Seite 7, Zusammenfassung Punkt 1; Seite 2, linke Spalte, Absätze 2 bis 4 und rechte Spalte, Absatz 2; Seite 3, linke Spalte letzter Absatz bis rechte Spalte, Absatz 3; Seite 6, Beispiel 4 * | 1,2 |
|  | FR - A - 1 546 295 (BASF)<br><br>* Seite 3, Zusammenfassung, Punkte 1 und 2a; Seite 2, rechte Spalte, Absatz 5; Seite 3, Beispiel 1 * | 1 |

### KLASSIFIKATION DER ANMELDUNG (Int.Cl. 3)

C 09 D 3/72
C 08 G 18/62
C 09 D 3/80

### RECHERCHIERTE SACHGEBIETE (Int. Cl. 3)

C 08 G 18/62
C 08 F 220/28

### KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 20-11-1979 | V. PUYMBROECK |

EPA form 1503.1 06.78